# EUROPÄISCHE PATENTSCHRIFT

(11) **EP 1 932 727 B1**
(45) Veröffentlichungstag und Bekanntmachung des Hinweises auf die Patenterteilung: **06.04.2011**
(21) Anmeldenummer: 07022845.7
(22) Anmeldetag: 26.11.2007
(51) Int. Cl.: B60R 16/023, G06F 3/01, B60W 50/08

(54) **Bedienvorrichtung eines Kraftfahrzeugs und Verfahren zum Erfassen von Nutzereingaben**
Operational device for a motor vehicle and method for capturing user input
Dispositif de commande d'un véhicule automobile et procédé de saisie de données d'utilisateurs

(30) Priorität: 14.12.2006 DE 102006059032
(43) Veröffentlichungstag der Anmeldung: 18.06.2008
(73) Patentinhaber: Volkswagen Aktiengesellschaft, 38436 Wolfsburg (DE)
(72) Erfinder: Wäller, Christoph, 38102 Braunschweig (DE); Bachfischer, Katharina, 38440 Wolfsburg (DE); Bendewald, Lennart, 38442 Wolfsburg (DE)
(74) Vertreter: Obst, Bernhard

(56) Entgegenhaltungen:
- WO-A-99/06987
- WO-A-2005/017727
- US-A- 5 923 267

## Beschreibung

Die Erfindung betrifft eine Bedienvorrichtung eines Kraftfahrzeugs sowie ein Verfahren zum Erfassen von Nutzereingaben in einem Kraftfahrzeug.

Kraftfahrzeuge verfügen in der Regel über eine Vielzahl von Bedienelementen, über die unterschiedliche Funktionen des Kraftfahrzeugs aktiviert werden können. Moderne Kraftfahrzeuge umfassen hierfür in der Regel eine Multifunktionsbedienvorrichtung, die meist eine Anzeigevorrichtung umfasst. Diese Anzeigevorrichtung ist häufig als Touchscreen ausgebildet. Auf dem Touchscreen werden Bedienflächen angezeigt. Eine Betätigung eines solchen als virtuell bezeichneten Bedienelements erfolgt durch eine Berührung der berührungsempfindlichen Oberfläche des Touchscreens durch ein Betätigungselement. Das Betätigungselement wird in der Regel ein Körperteil, meist ein Finger, des Nutzers sein. Der Touchscreen ist so ausgebildet, dass eine Berührposition erfasst werden kann. Diese wird in Relation zu einer Darstellungsfläche des virtuellen Bedienelements gesetzt. Stimmt die Berührposition mit der Position der Darstellung des virtuellen Bedienelements überein, wird eine Betätigung des virtuellen Bedienelements erfasst.

Zusätzlich umfassen solche Multifunktionsbedieneinrichtungen in der Regel in Hardware ausgebildete Bedienelemente, die vorzugsweise um die Anzeigevorrichtung angeordnet sind. Hierdurch ist es möglich, die im jeweiligen Bedienkontext den einzelnen als Hardware ausgebildeten Bedienelementen zugewiesenen Funktionen grafisch benachbart zu den jeweiligen Bedienelementen auf der Anzeigevorrichtung darzustellen. Hierdurch wird es dem Nutzer erleichtert, das jeweils korrekte Bedienelement zu finden; welches er zum Auslösen einer gewünschten Funktion betätigen muss.

Häufig ist es jedoch für einen Nutzer trotzdem nicht ausreichend erkennbar, welche Konsequenzen eine Betätigung eines bestimmten Bedienelements im jeweils aktuellen Nutzungskontext hat. Die Folge sind häufig Fehlbedienungen. Diese erfordern ein anschließendes Rückgängigmachen einer soeben vorgenommenen Betätigungshandlung. Bei einer menüorientierten Eingabevorrichtung bedeutet dies beispielsweise, dass zu einer vorherigen Menüebene zurückgekehrt werden muss. Fehlbedienungen durch mangelhafte Absehbarkeit von Bedienkonsequenzen sowie "Versuch-und-'Irrtum"-geprägte Bedienabläufe kosten Zeit und stellen im Fahrzeug für den Fahrer somit ein Sicherheitsrisiko dar. Zudem erzeugen sie Frustration und ein negatives Produkterlebnis.

Insbesondere bei Bedienelementen, die nicht unmittelbar benachbart zu einer Anzeigefläche angeordnet seien können, ist eine Beschriftung, insbesondere eine kontextbezogene Beschriftung, meist nur unzureichend oder gar nicht möglich. Auch diese mangelhafte Beschriftung trägt zu der o.g. mangelhaften Absehbarkeit von Bedienkonsequenzen und somit zu Fehlbedienungen und indirekt zu einem Sicherheitsrisiko bei.

Aus der US 6,009,355 und US 6,330,497 B1 sind Multimediainformations- und Steuerungssysteme für Kraftfahrzeuge bekannt, die menügesteuerte Informationen über verschiedene Fahrzeugsysteme anbieten. Die Menüsteuerung ist so ausgebildet, dass bei einer Anwahl einer von mehreren Menüoptionen mittels einer Betätigung eines Bedienelements die ausgewählte Menüoption grafisch hervorgehoben wird und zusätzlich eine akustische Information ausgegeben wird, die den Zweck oder Inhalt der ausgewählten Option angibt, bevor der Nutzer diese endgültig anwählt. Die endgültige Anwahl erfolgt über eine erneute Betätigung. Die zu der so angewählten Menüoption zugehörigen Informationen werden sowohl in Textform als auch in Sprache ausgegeben. Um bei diesem System Informationen zu erhalten, ist somit immer eine doppelte Betätigung eines Bedienelements erforderlich.

Aus der US 6,703,944 B1 ist ein Steuerungs- und Managementsystem für ein Kraftfahrzeug bekannt, welches über eine menügeführte grafische Benutzeroberfläche realisiert ist. Eine Auswahl von Optionen erfolgt mittels einer Maus, eines Trackballs, eines Joysticks oder über in Hardware oder virtuell mittels eines Touchscreens ausgebildeten Bedienelementen.

Aus der WO 2004/078536 sind ein Verfahren und eine Vorrichtung einer berührungslos wirkenden Bedieneinrichtung für ein Kraftfahrzeug bekannt. Hierzu werden Hochfrequenzsignale in den menschlichen Körper eines Nutzers eingekoppelt. Nähert sich der Körper einem Bedienelement, welches einen Sensor zum Empfangen der Hochfrequenzsignale umfasst oder in dessen Umgebung ein solcher Sensor angeordnet ist, so können die Hochfrequenzsignale vor einer Berührung des Bedienelements erfasst werden. Hierüber ist es möglich, eine Annäherung an das jeweilige Bedienelement vor einer tatsächlichen Berührung und Betätigung des Bedienelements zu erfassen. Mit Hilfe mehrerer Sensoren ist es zusätzlich möglich, eine Position des Körperteils, beispielsweise eines Fingers, im dreidimensionalen Raum zu ermitteln.

Aus der der Erfindung nächtsliegenden WO 2005/017727 A1 ist ein Erfassungssystem zum Erfassen der Nähe eines Nutzers zu einer Bedieneinheit bekannt, das einen Sender zum Senden eines Signals, einen primären Empfänger zum Empfangen des über den Nutzer übertragenen Signals als ein primäres Signal und einen Referenzempfänger zum Empfangen des über den Nutzer übertragenen Signals als ein Referenzsignal umfasst. Der Sender und der Referenzempfänger sind bei einer Ausführungsform mit dem Nutzer und der primäre Empfänger mit der Bedieneinheit assoziiert. Aus dem Referenzsignal und dem primären Signal wird eine Nähe des Nutzers zu der Bedieneinheit ermittelt. Beschrieben ist eine Ausführungsform, bei der bei einer Annäherung an eine mit zwei Schaltern ausgebildete Bedieneinheit, die Schalter in ihren aktuellen Stellungen auf einem Head-up-Display dargestellt werden.

Der Erfindung liegt die technische Aufgabe zugrunde, eine Bedienvorrichtung für ein Kraftfahrzeug sowie ein Verfahren zum Erfassen einer Nutzereingabe zu schaffen, mit denen eine intuitive Bedienung von Fahrzeugfunktionen und Systemen erleichtert wird und zusätzlich eine Wahrscheinlichkeit für eine Fehlbedienung, insbesondere aufgrund mangelnder Absehbarkeit einer Betätigungskonsequenz eines Bedienelements durch den Nutzer, verringert wird.

Die Aufgabe wird erfindungsgemäß durch eine Bedienvorrichtung mit den Merkmalen des Patentanspruchs 1 sowie ein Verfahren zum Erfassen von Nutzereingaben mit den Merkmalen des Patentanspruchs 6 gelost. Vorteilhafte Ausgestaltungen der Erfindung ergeben sich aus den Unteransprüchen.

Hierfür ist vorgesehen, dass eine Bedienvorrichtung eines Kraftfahrzeugs, die eine Steuereinheit und mindestens ein mit der Steuereinheit gekoppeltes Bedienelement umfasst, über dessen Betätigung eine Nutzereingabe erfassbar ist, eine mit der Steuereinheit gekoppelte Annäherungssensorik umfasst, mittels der eine Annäherung eines Bedienelements, insbesondere eines Körperteils, vorzugsweise eines Fingers, eines Nutzers, an das mindestens eine Bedienelement vor einer Betätigung des mindestens einen Bedienelements erfassbar ist, wobei die Steuereinheit ausgestaltet ist, bei einer erfassten Annäherung des Betätigungselements an das mindestens eine Bedienelement eine mit einer Betätigung des Bedienelements im Zusammenhang stehende Information vor einer Betätigung des Bedienelements auszugeben. Eine Nutzereingabe wird somit mittels einer Betätigung mindestens eines des mindestens einen Bedienelements erfasst, wobei Steuersignale von einer mit dem mindestens einen Bedienelement gekoppelten Steuereinrichtung zum Auslösen einer Funktion/Bedienhandlung erzeugt werden. Eine Annäherung eines Betätigungselements an das mindestens eine Bedienelement wird mittels einer mit der Steuereinheit verknüpften Annäherungssensorik verfasst und in Folge der erfassten Annäherung an das mindestens eine Bedienelement eine mit einer Betätigung des Bedienelements im Zusammenhang stehende Information vor einer Betätigung des Bedienelements ausgegeben. Hierbei wird dem Nutzer eine Information ausgegeben, die angibt, welche Konsequenz eine Betätigung des mindestens einen Bedienelements nach sich zieht, an die er das Betätigungselement angenähert hat. Er kann so eine Konsequenz seines Handelns abschätzen. Erfindungsgemäß ist die Steuereinheit mit einer Anzeigevorrichtung gekoppelt, wobei die Ausgabe der Informationen visuell über die Anzeigevorrichtung erfolgt, wobei die Anzeigevorrichtung als Touchscreen ausgebildet ist. Bei einer solchen Ausführungsform handelt es sich bei dem mindestens einen Bedienelement um ein virtuelles Bedienelement, das mittels des Touchscreens ausgebildet ist.

Im Folgenden wird davon ausgegangen, dass das Betätigungselement jeweils ein Zeigefinger einer Hand des Nutzers ist. Ebenso gut kann es sich jedoch in der Praxis auch um einen beliebigen anderen Gegenstand handeln, den der Nutzer zum Betätigen des Bedienelements an dieses annähert, beispielsweise ein Stift. Mit der beschriebenen Bedienvorrichtung und dem beschriebenen Verfahren wird jeweils der Vorteil erreicht, dass die Bedienkonsequenzen ohne ein Auslösen der entsprechenden Bedienhandlung erkannt werden können. Hierdurch werden unnötige Bedienhandlungen vermieden. Dieses führt insgesamt zu einer Komfortsteigerung für den Nutzer. Ferner wird eine Bedienzeit insgesamt verkürzt, was eine Steigerung der Sicherheit bedeutet, da ein Fahrer eine kürzere Zeit von anderen Aufgaben abgelenkt ist, um über die Bedienvorrichtung eine Fahrzeugfunktion auszulösen oder eine andere Bedienhandlung vorzunehmen. Insgesamt wird die Wahrscheinlichkeit für eine Fehlbedienung und die Anzahl von Fehlbedienungen deutlich reduziert.

Bei einer besonders bevorzugten Ausführungsform ist vorgesehen, dass die ausgegebene Information eine Ansicht zumindest eines Teils der Ansicht umfasst, die nach einer Betätigung des mindestens einen Bedienelements auf der Anzeigevorrichtung angezeigt werden wird. Hierdurch wird eine Vorausschau auf eine Ansicht möglich, die sich nach dem Betätigen des mindestens einen Bedienelements auf der Anzeigefläche ergeben wird. Ist das mindestens eine Bedienelement als virtuelles Bedienelement auf einem Touchscreen ausgebildet, so wird es wünschenswert sein, dessen Darstellung bei der Vorausschau eingeblendet oder überblendet mit darzustellen, um dem Nutzer eine Orientierung zu geben, wie er das mindestens eine Bedienelement auslösen kann. Das Einblenden und/oder Überlagern kann insbesondere transparent erfolgen. In einem solchen Fall unterscheidet sich die Vorausschau von der tatsächlichen Ansicht nach der Betätigung des mindestens einen Bedienelements dadurch, dass das mindestens eine Bedienelement in der Ansicht nach der Betätigung nicht, an anderer Stelle oder grafisch hervorgehoben dargestellt wird. Dadurch, dass zumindest ein Teil der Ansicht, die sich nach der Betätigung des mindestens einen Bedienelements ergibt, als Vorausschau dargestellt wird, wird dem Nutzer jedoch eine ausreichende Information geboten, um sich über eine Betätigungskonsequenz vor einem Betätigen des mindestens einen Bedienelements zu informieren.

Vorteilhafterweise ist zusätzlich und/oder alternativ vorgesehen, dass die ausgegebene Information eine Erläuterung der bei der Betätigung des mindestens einen Bedienelements ausgelösten Funktion/Bedienhandlung umfasst. So kann beispielsweise bei einer Annäherung an das mindestens eine Bedienelement auf der Anzeigevorrichtung ein Text eingeblendet werden, der die bei der Betätigung ausgelöste Funktion und/oder Bedienhandlung beschreibt und/oder charakterisiert.

Bei einer anderen Ausführungsform der Erfindung ist ferner vorgesehen, dass mit der Steuereinheit mindestens ein weiteres Bedienelement gekoppelt ist, wobei die Annäherungssensorik so ausgebildet ist, dass eine Annäherung des Betätigungselements an das mindestens eine Bedienelement von einer Annäherung an das mindestens eine weitere Bedienelement unterschieden werden kann, wobei die Steuereinheit ausgebildet ist, beim Erkennen einer Annäherung des Betätigungselements an das mindestens eine weitere Bedienelement eine mit einer Betätigung des mindestens einen weiteren Bedienelements im Zusammenhang stehende Information auszugeben. Dies bedeutet, dass der Nutzer das Betätigungselement, seinen Finger, an unterschiedliche Bedienelemente annähern kann und jeweils die mit einer Betätigung des jeweiligen Bedienelements im Zusammenhang stehenden Informationen ausgegeben bekommt, die mit dem Bedienelement verknüpft sind, dem das Betätigungselement gegenwärtig am nächsten angenähert ist.

Vorteilhafterweise ist vorgesehen, dass die mit dem mindestens einen Bedienelement oder dem mindestens einen weiteren Bedienelement im Zusammenhang stehende Information akustisch und/oder visuell ausgegeben wird. Eine akustische Ausgabe bietet den Vorteil, dass ein Nutzer seinen Blick nicht von der Fahrbahn wenden muss, um die Betätigungskonsequenz eines Bedienelements zu überprüfen. Insbesondere bei Bedienelementen, die nicht dicht benachbart zu der Anzeigevorrichtung angeordnet sind, ist dieses darüber hinaus vorteilhaft, da der Nutzer in der Regel seinen Blick auf das Bedienelement gerichtet hat, dem er das Betätigungselement annähert. Durch die akustische Informationsausgabe ist er somit nicht gezwungen, auf eine Anzeige zu schauen, die nicht in seinem Blickfeld liegt, während er das Bedienelement betrachtet.

Um eine zügige Bedienung über die Bedienvorrichtung zu gewährleisten, ist bei einer besonders bevorzugten Ausführungsform vorgesehen, dass das Ausgeben der Informationen vor der Betätigung des Bedienelements nur erfolgt, wenn die Annäherung des Betätigungselements an das mindestens eine Bedienelement und/oder mindestens eine weitere Bedienelement für eine Zeitspanne andauert, die größer als ein vorgegebenes Zeitintervall ist. Wünscht der Nutzer somit keine Informationen, die ihm eine Vorausschau ermöglichen und eine Abschätzung der Bedienkonsequenz ermöglichen, so kann er bei dieser besonders bevorzugten Ausführungsform das Betätigungselement in einer zügigen Bewegung dem entsprechenden Bedienelement annähern und dieses betätigen, ohne dass die im Zusammenhang mit der Betätigung stehenden Informationen vor einer Betätigung des Bedienelements ausgegeben werden.

Die Merkmale des erfindungsgemäßen Verfahrens weisen dieselben Vorteile wie die entsprechenden Merkmale der erfindungsgemäßen Vorrichtung auf.

Die Erfindung wird nachfolgend anhand bevorzugter Ausführungsformen näher erläutert. Hierbei zeigen:
- Fig. 1: eine schematische Ansicht einer Bedienvorrichtung;
- Fig. 2: eine schematische Ansicht einer weiteren Ausführungsform einer Bedienvorrichtung;
- Fig. 3a: eine Ansicht einer Bedienvorrichtung, bevor ein Betätigungselement angenähert ist;
- Fig. 3b, 3c: Ansichten der Bedienvorrichtung nach Fig. 3a, bei denen ein Betätigungselement an ein Bedienelement bzw. an ein weiteres Bedienelement angenähert ist;
- Fig. 3d, 3e: schematische Ansichten der Bedienvorrichtung nach Fig. 3a, die sich ergeben, nachdem das Betätigungselement das Bedienelement bzw. das weitere Bedienelement betätigt hat;
- Fig. 4a: eine als Touchscreen ausgebildete Bedienvorrichtung vor einer Bedienhandlung;
- Fig. 4b: eine schematische Ansicht der Bedienvorrichtung nach Fig. 4a in einem Zustand, in dem ein Betätigungselement einem der Bedienelemente angenähert ist;
- Fig. 5a: eine weitere schematische Ansicht einer Bedienvorrichtung, bei der kein Betätigungselement an eines der Bedienelemente angenähert ist; und
- Fig. 5b: eine Ansicht der Bedienvorrichtung nach Fig. 5a in einem Zustand, in dem ein Betätigungselement einem der Bedienelement angenähert ist.

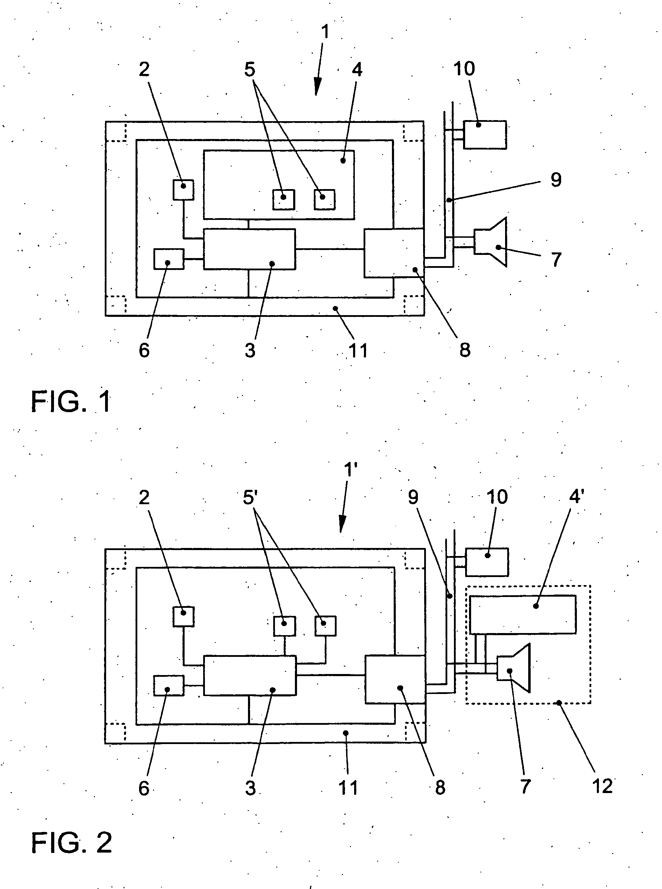

In Fig. 1 ist eine Ausführungsform einer Bedienvorrichtung 1 schematisch dargestellt. Die Bedienvorrichtung umfasst ein als Schaltelement ausgebildetes Bedienelement 2, das mit einer Steuereinheit 3 gekoppelt ist. Mit der Steuereinheit 3 ist eine Anzeigevorrichtung 4 gekoppelt.

Die Anzeigevorrichtung 4 ist als Touchscreen ausgebildet. Mittels der Anzeigevorrichtung 4 sind weitere Bedienelemente 5, die virtuelle Bedienelemente sind, ausgebildet. Ferner ist mit der Steuereinheit 3 eine Speichereinrichtung 6 gekoppelt. In der Speichereinrichtung 6 sind die Informationen abgelegt, die bei einer Annäherung eines Betätigungselements an das Bedienelement 2 oder eines der weiteren Bedienelemente 5 vor einer Betätigung des Bedienelements 2 oder eines der weiteren Bedienelemente 5 ausgegeben werden. Ausgegeben werden jeweils die Informationen, die mit einer Betätigung des Bedienelements 2 bzw. eines der weiteren Bedienelemente 5 im Zusammenhang stehen. Die Ausgabe erfolgt entweder über die Anzeigevorrichtung 4 oder über eine akustische Ausgabevorrichtung 7, die mit der Bedienvorrichtung 1 gekoppelt ist. Die Kopplung erfolgt vorzugsweise über eine Schnittstelle 8 und einen Fahrzeugdatenbus 9. Über den Fahrzeugdatenbus 9 und die Schnittstelle 8 kann die Steuereinheit 3 zusätzliche Informationen empfangen und in der Speichereinheit 6 ablegen, die im Zusammenhang mit einer Betätigung des Bedienelements 2 oder eines der weiteren Bedienelemente 5 stehen. Wird die Bedienvorrichtung 1 beispielsweise verwendet, um einen CD-Player zu bedienen, so können die empfangenen Informationen einen CD-Titel sowie die darauf enthaltenen Liednamen umfassen.

Wird das Bedienelement 2 oder eines der weiteren Bedienelemente 5 durch ein Betätigungselement, beispielsweise einen Finger eines Nutzers, betätigt, so erzeugt die Steuereinrichtung 3 Signale, um entsprechende Fahrzeugfunktionen auszulösen. Diese Signale werden über die Schnittstelle 8 und den Fahrzeugdatenbus 9 zu den entsprechenden Fahrzeugsystemen 10 übermittelt, die die entsprechenden Funktionen ausführen und/oder bereitstellen. Die Bedienvorrichtung 1 umfasst ferner eine Annäherungssensorik 11, die mehrere Sensoren umfassen kann und in der Lage ist, eine Annäherung eines Betätigungselements an das eine Bedienelement 2 oder eines der weiteren Bedienelemente 5 zu erfassen. Die Annäherungssensorik 11 ist so ausgebildet, dass sie eine Annäherung des Betätigungselements an das Bedienelement 2 von einer Annäherung an eines der weiteren Bedienelemente 5 und umgekehrt unterscheiden kann. Auch eine Annäherung an die weiteren Bedienelemente 5 können jeweils unterschieden werden.

In Fig. 2 ist eine weitere Ausführungsform einer Bedienvorrichtung 1' dargestellt. Gleiche technische Merkmale sind mit denselben Bezugszeichen versehen. Die Ausführungsform nach Fig. 2 unterscheidet sich von der nach Fig. 1 dadurch, dass die Bedienvorrichtung 1' keine Anzeigevorrichtung umfasst. Ferner sind weiteren Bedienelemente 5' als Hardwareschaltelemente ausgebildet. Die Anzeigevorrichtung 4' ist mit der akustischen Ausgabevorrichtung 7 in einer Multimediaeinheit 12 zusammengefasst, die mit der Bedienvorrichtung 1' über den Fahrzeugdatenbus 9 verbunden ist. Ansonsten ist die Wirkungsweise der Bedienvorrichtung 1' nach Fig. 2a analog zu der Bedienvorrichtung 1 nach Fig. 1.

Andere Ausführungsformen können so ausgeführt sein, dass sie nur ein Bedienelement umfassen.

Die Annäherungssensorik kann so ausgebildet sein, dass sie über den Körper übertragene Hochfrequenzsignale erfasst, wie oben erläutert ist. Alternativ können andere Sensoren und Sensorkonzepte zur Realisierung der Annäherungssensorik 11 verwendet werden. Beispielsweise können optische Verfahren zur Anwendung kommen.

Eine Sensoreinheit einer optischen Annäherungssensorik kann beispielsweise gemäß folgendem Prinzip ausgestaltet sein. Eine Sende-LED strahlt ein rechtförmig amplitudenmoduliertes Lichtsignal im optischen oder infraroten Wellenlängenbereich ab. Das an dem Betätigungselement reflektierte Lichtsignal wird von einer Fotodiode erfasst. Von einer Kompensations-LED wird ein um 180° phasenversetztes, ebenfalls rechteckförmiges amplitudenmoduliertes Referenzsignal zu der Fotodiode über einen unveränderlichen Lichtweg gesandt. Die Kompensations-LED wird über einen Regelkreis mittels eines Regelsignals so ausgeregelt, dass sich das empfangene reflektierte Lichtsignal der Sende-LED und das empfangene Referenzlichtsignal der Kompensations-LED an der Fotodiode aufheben und ein Gleichsignal detektiert wird. Eine Änderung des Regelsignals ist ein Maß für den Abstand des Objekts. Eine nach diesem Prinzip ausgestaltete Sensoreinheit ist weitgehend unabhängig von Temperatur- und Helligkeitsschwankungen. Eine Annäherungssensorik, die eine Position des Betätigungselements im Raum ermitteln kann, umfasst vorzugsweise mehrere solcher Sensoreinheiten.

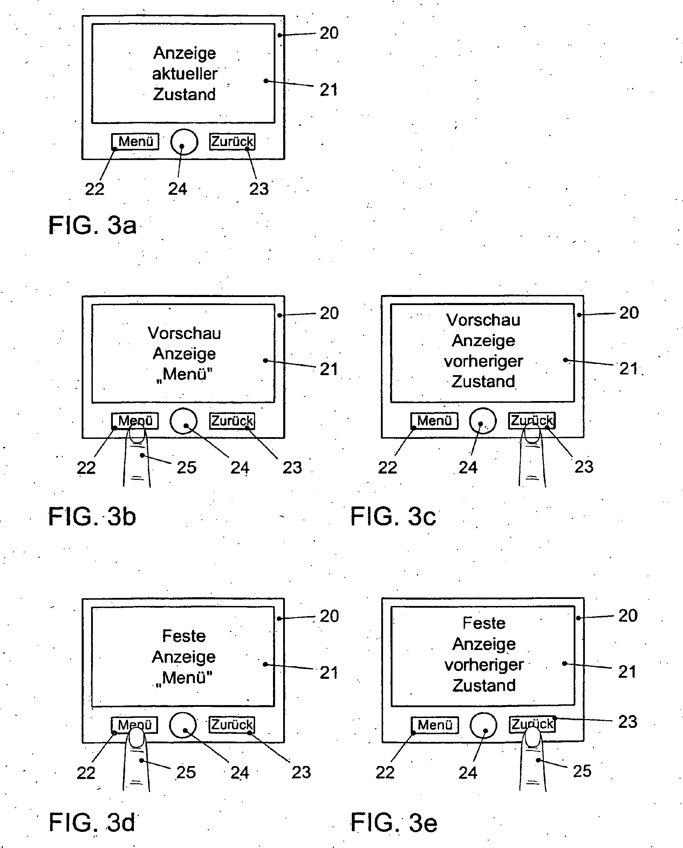

In Fig. 3a ist die Ansicht einer weiteren Bedienvorrichtung 20 schematisch dargestellt. Die Bedienvorrichtung 20 umfasst eine Anzeigevorrichtung 21. Unter der Anzeigevorrichtung 21 sind ein Bedienelement 22 und ein weiteres Bedienelement 23 angeordnet, die jeweils als Tastschalter ausgebildet sind. Zwischen dem Bedienelement 22 und dem weiteren Bedienelement 23 ist ein zusätzliches Bedienelement 24 angeordnet, welches als Dreh-Drück-Knopf ausgebildet ist. Auf der Anzeigevorrichtung 22 ist eine Ansicht eines aktuellen Zustands des bedienten Fahrzeugsystems oder der zu bedienenden Funktion oder der Benutzeroberfläche usw. dargestellt.

In Fig. 3b ist die Bedienvorrichtung 20 nach Fig. 3a dargestellt. Ein Betätigungselement 25, welches ein Finger des Nutzers ist, ist an das Bedienelement 22 angenähert, hat dieses jedoch noch nicht betätigt. Dieser Zustand ist dadurch angedeutet, dass das Betätigungselement 25 halbtransparent dargestellt ist. Auf der Anzeigevorrichtung 21 ist eine Anzeige eines Menüs dargestellt, die bei einer Betätigung des Bedienelements 22 aufgerufen wird. In Fig. 3b ist entsprechend die Bedienvorrichtung 20 nach Fig. 3a dargestellt, wobei das Betätigungselement 25 über das weitere Bedienelement 23 bewegt ist. Entsprechend ist die mit der Betätigung des als Zurückknopf ausgebildeten weiteren Bedienelements 23 verknüpfte Information dargestellt. Dies ist somit die Ansicht, die in einer vorausgegangenen Bedienebene dargestellt ist.

In Fig. 3d ist die Bedienvorrichtung 20 in dem Zustand dargestellt, der sich ergibt, wenn das Betätigungselement 25 das Bedienelement 22 betätigt hat. Auf der Anzeigevorrichtung 21 ist nun das Menü dargestellt, das zuvor als Vorschau dargestellt war. Der Unterschied besteht darin, dass bei einem Entfernen des Betätigungselements 25 das Menü weiterhin dargestellt bleibt.

In Fig. 3e ist entsprechend der Zustand der Bedienvorrichtung 20 dargestellt, der sich ergibt, wenn das als Zurückknopf ausgebildete weitere Bedienelement 23 durch das Betätigungselement 25 betätigt worden ist. Nunmehr wird fest der Zustand angezeigt, der zu der vorausgegangenen Bedienebene korrespondiert.

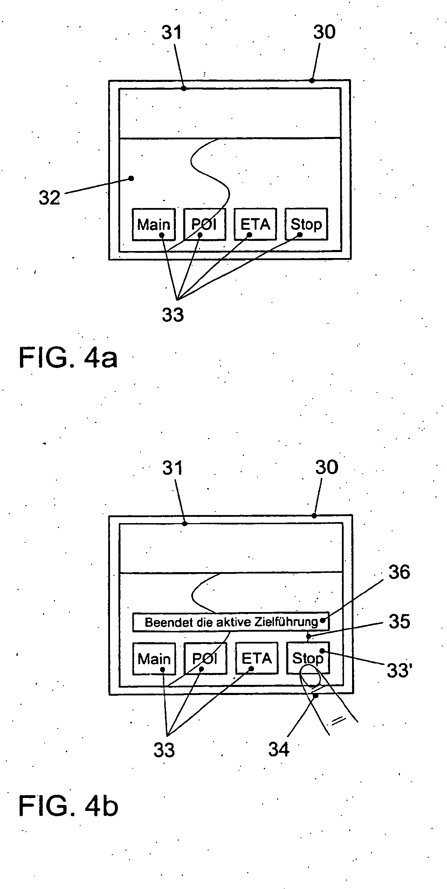

In Fig. 4a und 4b ist eine weitere Ausführungsform einer Bedienvorrichtung 30 dargestellt. Diese umfasst eine Anzeigevorrichtung 31, die als Touchscreen ausgebildet ist. In einem unteren Bereich einer Ansicht 32 einer Navigationssystemanwendung sind Bedienelemente 33 eingeblendet. In Fig. 4a ist ein Zustand dargestellt, dem kein Betätigungselement, d.h. kein Finger, einem der Bedienelemente 33 angenähert ist. In Fig. 4b ist hingegen ein Betätigungselement 34, ein Finger, einem als "Stop"-Knopf ausgebildeten Bedienelement 33' der Bedienelemente 33 angenährt. Verbunden über eine Linie 35 ist eine Erläuterung in einem Kasten 36 eingeblendet. Die Erläuterung gibt an, was eine Betätigung des "Stop"-Knopfes bewirkt. In diesem Fall wird eine aktive Zielführung beendet. Der Nutzer kann sich somit eine Bedienkonsequenz vor einer Betätigung des Stoppknopfes beschaffen. Um die Zuordnung der Erläuterung noch deutlicher hervorzuheben, ist auch das als "Stop"-Knopf ausgebildete Bedienelement 33' in Fig. 4b optisch hervorgehoben.

Eine Ausführungsform kann so ausgestaltet sein, dass die Einblendung der Erläuterung in dem Kasten 36 nur erfolgt, wenn das Betätigungselement 34 eine Zeitspanne über dem "Stop"-Knopf verweilt, die größer als ein vorgegebenes Zeitintervall ist. Andernfalls unterbleibt die Einblendung der Erläuterung und ermöglicht eine Bedienhandlung, die nicht durch das Einblenden einer Erläuterung oder einer Vorausschau "unterbrochen" ist. Ein solches zeitabhängiges Verhalten kann auch bei allen anderen beschriebenen Ausführungsformen vorgesehen werden.

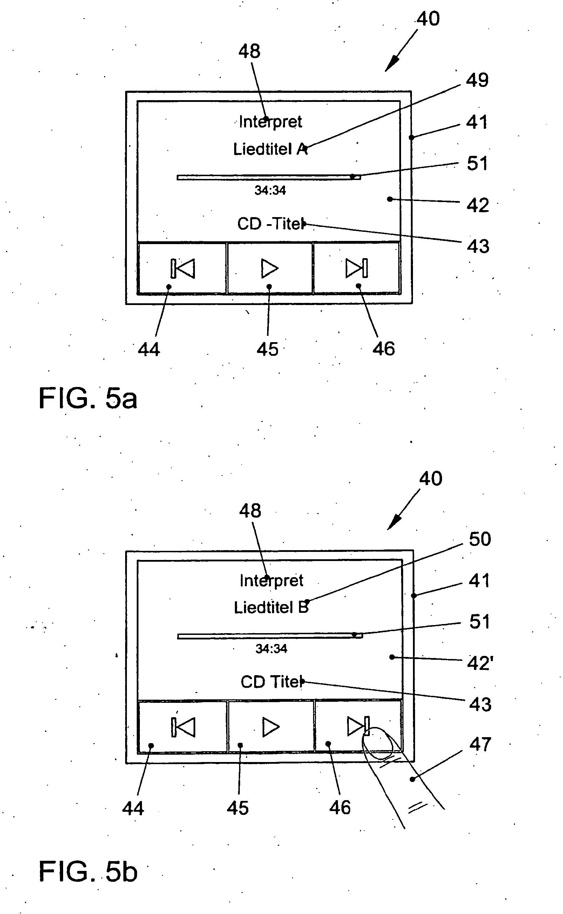

In Fig. 5a und 5b ist eine weitere Ausführungsform einer Bedieneinrichtung 40 mit einer als Touchscreen ausgebildeten Anzeigevorrichtung 41 dargestellt. Auf der Anzeigevorrichtung 41 ist eine Ansicht 42 einer Benutzerschnittstelle dargestellt, mit der ein CD-Wiedergabegerät gesteuert werden kann. In der Ansicht sind der Titel der eingelegten CD 43, der Name des oder der Künstler (Interpret) 48 und ein jeweils aktuell wiedergegebener Liedtitel 49, 50 sowie eine Gesamtabspieldauer 51 dargestellt. In der Fig. 5a ist die Ansicht gezeigt, bei der kein Betätigungselement an eines der Bedienelemente 44, 45, 46 angenähert ist. Das Bedienelement 44 ist als Zurücksprungknopf, das Bedienelement 45 als Wiedergabeknopf und das Bedienelement 46 als Vorwärtssprungknopf ausgebildet.

In Fig. 5b ist ein Betätigungselement 47, welches ein Finger ist, an das Bedienelement 46 angenähert. Entsprechend ist das Bedienelement 46 in der Ansicht optisch hervorgehoben. Die restliche Ansicht 42' unterscheidet sich von der Ansicht 42 nach Fig. 5a dadurch, dass anstelle des Liedtitels A 49 der nächste Liedtitel B 50 eingeblendet ist. Vorzugsweise ist der nächste Liedtitel B 50 hervorgehoben dargestellt. Es ist somit die Ansicht dargestellt, die sich ergibt, wenn das Betätigungselement 47 das Bedienelement 46 betätigt. Hierdurch ist es möglich, dass der Nutzer sich den nächsten Liedtitel B 50 anzeigen lässt, ohne eine Wiedergabe des aktuellen Liedtitels A 49 zu unterbrechen, was eine Betätigung des Vorwärtssprungknopfes bewirken würde.

Die beschriebenen Ausführungsbeispiele verdeutlichen, dass eine intuitivere Bedienung für einen Nutzer durch die Erfindung ermöglicht wird. Durch die Möglichkeit einer Vorausschau bzw. die Ausgabe von Erläuterungen, die eine Bedienkonsequenz für ein Bedienelement angeben, ist es möglich, sich über diese Bedienkonsequenz vor einer Betätigung zu informieren. Hierdurch können Fehlbedienungen vermieden werden. Zusätzlich zu der visuellen Vorausschau und/oder Erläuterung, die kombiniert werden können, oder alternativ kann jeweils auch eine akustische Ausgabe erfolgen.

### Bezugszeichenliste

| | | | |
|---|---|---|---|
| 1, 1' | Bedienvorrichtung | 31 | Anzeigevorrichtung |
| 2 | Bedienelement | 32 | Ansicht |
| 3 | Steuereinheit | 33 | Bedienelement |
| 4, 4' | Anzeigevorrichtung | 34 | Betätigungselement |
| 5, 5' | weitere Bedienelemente | 35 | Linie |
| 6 | Speichereinheit | 36 | Kasten |
| 7 | akustische Ausgabevorrichtung | 40 41 | Bedienvorrichtung Anzeigevorrichtung |
| 8 | Schnittstelle | 42, 42' | Ansicht der |
| 9 | Fahrzeugdatenbus | | Anzeigevorrichtung |
| 10 | Fahrzeugsystem | 43 | CD-Titel |
| 11 | Annäherungssensorik | 44 | Bedienelement |
| 12 | Multimediasystem | 45 | Bedienelement |
| 20 | Bedienvorrichtung | 46 | Bedienelement |
| 21 | Anzeigevorrichtung | 47 | Betätigungselement |
| 22 | Bedienelement | 48 | Interpret |
| 23 | weiteren Bedienelement | 49 | Liedtitel |
| 24 | zusätzliches Bedienelement | 50 | nächster Liedtitel |
| 25 | Betätigungselement | 51 | Gesamtspieldauer |
| 30 | Bedienvorrichtung | | |

## Patentansprüche

1. Bedienvorrichtung (1, 1', 20, 30, 40) eines Kraftfahrzeugs umfassend eine Steuereinheit (3) und mindestens ein mit der Steuereinheit (3) gekoppeltes Bedienelement (2, 22, 33, 46), über dessen Betätigung eine Nutzereingabe erfassbar ist,wobei mit der Steuereinheit (3) eine Annäherungssensorik (11) gekoppelt ist, mittels der eine Annäherung eines Betätigungselements (25, 34, 47), insbesondere eines Körperteils, beispielsweise eines Fingers, eines Nutzers, an das mindestens eine Bedienelement (2, 22, 33, 46) vor einer Betätigung des mindestens einen Bedienelements (2, 22, 33, 46) erfassbar ist, wobei die Steuereinheit (3) ausgestaltet ist, bei einer erfassten Annäherung des Betätigungselements (25, 34, 47) an das mindestens eine Bedienelement (2, 22, 33, 46) eine mit einer Betätigung des mindestens einen Bedienelements (2, 22, 33, 46) im Zusammenhang stehende Information vor einer Betätigung des mindestens einen Bedienelements (2, 22, 33, 46) auszugeben, **dadurch gekennzeichnet, dass** mit der Steuereinheit eine Anzeigevorrichtung (4, 4', 21, 31, 41) gekoppelt ist, die als Touchscreen ausgebildet ist, und das mindestens eine Bedienelement ein virtuelles mittels des Touchscreens ausgebildetes Bedienelement (33, 46) ist, wobei die mit der Betätigung des mindestens einen Bedienelements (2, 22, 33, 46) im Zusammenhang stehende Information angibt, welche nächste Konsequenzen eine Betätigung des mindestens einen Bedienelements (2, 22, 33, 46) hat.

2. Bedienvorrichtung (1, 1', 20, 30, 40) nach einem der genannten Ansprüche, **dadurch gekennzeichnet, dass** das Ausgeben der mit der Betätigung des mindestens einen Bedienelements (2, 22, 33, 46) im Zusammenhang stehenden Information nur erfolgt, wenn die erfasste Annäherung des Betätigungselement (25, 34, 47) an das mindestens eine Bedienelement (2, 22, 33, 46) eine Zeitdauer andauert, die größer als ein vorgegebenes Zeitintervall ist.

3. Bedienvorrichtung (1, 1', 20, 30, 40) nach einem der genannten Ansprüche, **dadurch gekennzeichnet, dass** die ausgegebene Information eine Ansicht (42') zumindest eines Teils der Ansicht der Anzeigevorrichtung umfasst, die nach einer Betätigung auf der Anzeigevorrichtung (4, 21, 31, 41) angezeigt werden wird.

4. Bedienvorrichtung (1, 1', 20, 30, 40) nach einem der genannten Ansprüche, **dadurch gekennzeichnet, dass** die ausgegebene Information eine Erläuterung der bei der Betätigung des mindestens einen Bedienelements (2, 22, 33, 46) ausgelösten Funktion/Bedienhandlung umfasst.

5. Bedienvorrichtung (1, 1', 20, 30, 40) nach einem der vorangehenden Ansprüche, **dadurch gekennzeichnet, dass** mit der Steuereinheit (3) mindestens ein weiteres Bedienelement (5, 5', 23, 44, 45) gekoppelt ist, wobei die Annäherungsensorik (11) so ausgebildet ist, dass eine Annäherung des Betätigungselements (25, 34, 47) an das mindestens eine Bedienelement (2, 22, 33, 46) von einer Annährung an das mindestens eine weitere Bedienelement (5, 5', 23, 44, 45) unterschieden werden kann, wobei die Steuereinheit (3) ausgebildet ist, beim Erkennen einer Annäherung des Betätigungselements (25, 34, 47) an das mindestens eine weitere Bedienelement (5, 5', 23, 44, 45) eine mit einer Betätigung des mindestens einen weiteren Bedienelements (5, 5', 23, 44, 45) im Zusammenhang stehende Information auszugeben.

6. Verfahren zum Erfassen von Nutzereingaben in einem Kraftfahrzeug, bei dem eine Betätigung mindestens eines Bedienelements (2, 22, 33, 46) erfasst wird und Steuersignale von einer mit dem mindestens einen Bedienelement (2, 22, 33, 46) gekoppelten Steuereinrichtung (3) zum Auslösen einer Funktion/Bedienhandlung erzeugt werden, wobei eine Annäherung eines Betätigungselements (25, 34, 47), insbesondere eines Körperteils, vorzugsweise eines Fingers, an das mindestens eine Bedienelement (2, 22, 33, 46) vor einer Betätigung des mindestens einen Bedienelements (2, 22, 33, 46) mittels einer mit der Steuereinheit (3) verknüpften Annäherungssensorik (11) erfasst wird und infolge der erfassten Annäherung an das mindestens eine Bedienelement (2, 22, 33, 46) eine mit einer Betätigung des mindestens einen Bedienelements (2, 22, 33, 46) im Zusammenhang stehende Information vor einer Betätigung des mindestens einen Bedienelements (2, 22, 33, 46) ausgeben wird, wobei das Ausgeben der Information über eine mit der Steuereinheit (3) gekoppelte Anzeigevorrichtung (4, 4', 21, 31, 41), die als Touchscreens ausgebildeten ist, erfolgt und das mindestens eine Bedienelement als ein virtuelles Bedienelement (5, 33, 46) mittels der Anzeigevorrichtung (4, 31, 41) ausgegeben wird und das Erfassen einer Betätigung des mindestens einen Bedienelements (5, 33, 46) ein Ermitteln einer Berührposition des Betätigungselements (25, 34, 47) auf einer Oberfläche der Anzeigevorrichtung (4, 31, 41) umfasst, wobei die mit der Betätigung des mindestens einen Bedienelements (2, 22, 33, 46) im Zusammenhang stehende Information angibt, welche nächste Konsequenzen eine Betätigung des mindestens einen Bedienelements (2, 22. 33, 46) hat.

7. Verfahren nach Anspruch 6, **dadurch gekennzeichnet, dass** als ausgegebene Information eine Ansicht (42') zumindest eines Teils der Anzeigefläche der Anzeigevorrichtung (4, 4', 21, 31, 41) ausgegeben werden, die nach einer Betätigung auf der Anzeigevorrichtung (4, 4', 21, 31, 41) angezeigt wird.

8. Verfahren nach einem der Ansprüche 6 oder 7, **dadurch gekennzeichnet, dass** eine Erläuterung der bei der Betätigung des mindestens einen Bedienelements (46) ausgelösten Funktion/Bedienhandlung ausgegeben wird.

9. Verfahren nach einem der Ansprüche 6 bis 8, **dadurch gekennzeichnet, dass** mit der Steuereinheit mindestens ein weiteres Bedienelement (5, 5', 23, 44, 45) gekoppelt ist, wobei die Annäherungsensorik (11) so ausgebildet ist, dass eine Annäherung des Betätigungselements (25, 34, 47) an das mindestens eine Bedienelement (2, 22, 46) von einer Annährung an das mindestens eine weitere Bedienelement (5, 5', 23, 44, 45) unterschieden wird, wobei beim Erkennen einer Annäherung des Betätigungselements (25, 34, 47) an das mindestens eine weitere Bedienelement (5, 5', 23, 44, 45) eine mit einer Betätigung des mindestens einen weiteren Bedienelements (5, 5', 23, 44, 45) im Zusammenhang stehende Information ausgegeben wird.

10. Verfahren nach einem der Ansprüche 6 bis 9, **dadurch gekennzeichnet, dass** die mit dem mindestens einen Bedienelement (2, 22, 33, 46) oder dem mindestens einen weiteren Bedienelement (5, 5', 23, 44, 45) im Zusammenhang stehende Information akustisch und visuell ausgegeben wird.

11. Verfahren nach einem der Ansprüche 6 bis 10, **dadurch gekennzeichnet, dass** das Ausgeben der Informationen vor der Betätigung des Bedienelements (2, 22, 46) nur erfolgt, wenn die Annäherung des Betätigungselements (25, 34, 47) an das mindestens eine Bedienelement (2, 22, 46) und/oder mindestens eine weitere Bedienelement (5, 5', 23, 44, 45) für eine Zeitspanne andauert, die größer als ein vorgegebenes Zeitintervall ist.

## Claims

1. Operator control device (1, 1', 20, 30, 40) of a motor vehicle, comprising a control unit (3) and at least one operator control element (2, 22, 33, 46) which is coupled to the control unit (3) and by whose activation a user input can be captured, wherein proximity sensor system (11) is coupled to the control unit (3), by means of which proximity of an activation element (25, 34, 47), in particular of a body part, for example of a finger, of a user, to the at least one operator control element (2, 22, 33, 46) can be captured before activation of the at least one operator control element (2, 22, 33, 46), wherein the control unit (3) is configured to output, in the event of captured proximity of the activation element (25, 34, 47) to the at least one operator control element (2, 22, 33, 46), an information item relating to activation of the at least one operator control element (2, 22, 33, 46), before the at least one operator control element (2, 22, 33, 46) is activated, **characterized in that** a display device (4, 4', 21, 31, 41) which is embodied as a touch screen, is coupled to the control unit, and the at least one operator control element is a virtual operator control element (33, 46) which is embodied by means of the touch screen, wherein the information item relating to the activation of the at least one operator control element (2, 22, 33, 46) indicates what the immediate consequences of activation of the at least one operator control element (2, 22, 33, 46) are.

2. Operator control device (1, 1', 20, 30 40) according to Claim 1, **characterized in that** the outputting of the information item relating to the activation of the at least one operator control element (2, 22, 33, 46) occurs only if the captured proximity of the activation element (25, 34, 47) to the at least one operator control element (2, 22, 33, 46) lasts for a time period which is longer than a predefined time interval.

3. Operator control device (1, 1', 20, 30, 40) according to one of the abovementioned claims, **characterized in that** the information item which is output comprises a view (42') of at least part of the display device, which view (42') is displayed on the display device (4, 21, 31, 41) after an activation process.

4. Operator control device (1, 1', 20, 30, 40) according to one of the abovementioned claims, **characterized in that** the information item which is output comprises an explanation of the function/operator control action which is triggered when the at least one operator control element (2, 22, 33, 46) is activated.

5. Operator control device (1, 1', 20, 30, 40) according to one of the preceding claims, **characterized in that** at least one further operator control element (5, 5', 23, 44, 45) is coupled to the control unit (3), wherein the proximity sensor system (11) is embodied in such a way that proximity of the activation element (25, 34, 47) to the at least one operator control element (2, 22, 33, 46) can be differentiated from proximity to the at least one further operator control element (5, 5', 23, 44, 45), wherein the control unit (3) is designed to output, in the event of detection of proximity of the activation element (25, 34, 47) to the at least one further operator control element (5, 5', 23, 44, 45), an information item relating to activation of the at least one further operator control element (5, 5', 23, 44, 45).

6. Method for captureing user inputs in a motor vehicle, in which activation of at least one operator control element (2, 22, 33, 46) is captured and control signals are generated by a control device (3), coupled to the at least one operator control element (2, 22, 33, 46), for triggering a function/operator control action, wherein proximity of an activation element (25, 34, 47), in particular of a body part, preferably of a finger, to the at least one operator control element (2, 22, 33, 46), is captured by means of a proximity sensor system (11) connected to the control unit (3), before activation of the at least one operator control element (2, 22, 33, 46), and as a result of the captured proximity to the at least one operator control element (2, 22, 33, 46) an information item relating to activation of the at least one operator control element (2, 22, 33, 46) is output before activation of the at least one operator control element (2, 22, 33, 46), wherein the outputting of the information item takes place via a display device (4, 4', 21, 31, 41) which is coupled to the control unit (3) and is embodied as a touch screen, and the at least one operator control element is output as a virtual operator control element (5, 33, 46) by means of the display device (4, 31, 41), and the capturing of activation of the at least one operator control element (5, 33, 46) comprises determination of a contact position of the activation element (25, 34, 47) on a surface of the display device (4, 31, 41), wherein the information item relating to the activation of the at least one operator control element (2, 22, 33, 46) indicates what the immediate consequences of activation of the at least one operator control element (2, 22, 33, 46) are.

7. Method according to Claim 6, **characterized in that** a view (42') of at least part of the display surface of the display device (4, 4', 21, 31, 41) which is displayed on the display device (4, 4', 21, 31, 41) after an activation process, is output as output information.

8. Method according to one of Claims 6 or 7, **characterized in that** an explanation of the function/operator control action which is triggered when the at least one operator control element (46) is activated is output.

9. Method according to one of Claims 6 to 8, **characterized in that** at least one further operator control element (5, 5', 23, 44, 45) is coupled to the control unit, wherein the proximity sensor system (11) is embodied in such a way that proximity of the activation element (25, 34, 47) to the at least one operator control element (2, 22, 46) is differentiated from proximity to the at least one further operator control element (5, 5', 23, 44, 45), wherein, when proximity of the activation element (25, 34, 47) to the at least one further operator control element (5, 5', 23, 44, 45) is detected, an information item relating to activation of the at least one further operator control element (5, 5', 23, 44, 45) is output.

10. Method according to one of Claims 6 to 9, **characterized in that** the information item relating to the at least one operator control element (2, 22, 33, 46) or the at least one further operator control element (5, 5', 23, 44, 45) is output acoustically and visually.

11. Method according to one of Claims 6 to 10, **characterized in that** the outputting of the information takes place before the activation of the operator control element (2, 22, 46) only if the proximity of the activation element (25, 34, 47) to the at least one operator control element (2, 22, 46) and/or at least one further operator control element (5, 5', 23, 44, 45) lasts for a time period which is longer than a predefined time interval.

## Revendications

1. Dispositif de commande (1, 1', 20, 30, 40) d'un véhicule automobile, comprenant un contrôleur (3) et au moins un élément de commande (2, 22, 33, 46) couplé avec le contrôleur (3) et dont l'actionnement permet de détecter une entrée par un utilisateur, un dispositif de détection d'approche (11) étant couplé avec le contrôleur (3), à l'aide duquel dispositif de détection il est possible de détecter une approche d'un élément d'actionnement (25, 34, 47), notamment d'une partie du corps, par exemple d'un doigt, d'un utilisateur, vers l'au moins un élément de commande (2, 22, 33, 46) avant un actionnement de l'au moins un élément de commande (2, 22, 33, 46), le contrôleur (3) étant configuré pour, en cas d'une approche détectée de l'élément d'actionnement (25, 34, 47) vers l'au moins un élément de commande (2, 22, 33, 46), délivrer une information en relation avec un actionnement de l'au moins un élément de commande (2, 22, 33, 46) avant un actionnement de l'au moins un élément de commande (2, 22, 33, 46), **caractérisé en ce qu'**un dispositif d'affichage (4, 4', 21, 31, 41) est couplé avec le contrôleur, lequel est réalisé sous la forme d'un écran tactile, et l'au moins un élément de commande est un élément de commande virtuel (33, 46) réalisé au moyen de l'écran tactile, l'information en relation avec l'actionnement de l'au moins un élément de commande (2, 22, 33, 46) indiquant quelles prochaines conséquences a un actionnement de l'au moins un élément de commande (2, 22, 33, 46).

2. Dispositif de commande (1, 1', 20, 30, 40) selon l'une des revendications précédentes, **caractérisé en ce que** la délivrance de l'information en relation avec l'actionnement de l'au moins un élément de commande (2, 22, 33, 46) n'a lieu que lorsque l'approche détectée de l'élément d'actionnement (25, 34, 47) vers l'au moins un élément de commande (2, 22, 33, 46) dure un temps qui est supérieur à un intervalle de temps prédéfini.

3. Dispositif de commande (1, 1', 20, 30, 40) selon l'une des revendications précédentes, **caractérisé en ce que** l'information délivrée comprend une vue (42') d'au moins une partie de la vue du dispositif d'affichage qui s'affiche après un actionnement sur le dispositif d'affichage (4, 21, 31, 41).

4. Dispositif de commande (1, 1', 20, 30, 40) selon l'une des revendications précédentes, **caractérisé en ce que** l'information délivrée comprend une explication de la fonction / manipulation de commande déclenchée lors de l'actionnement de l'au moins un élément de commande (2, 22, 33, 46).

5. Dispositif de commande (1, 1', 20, 30, 40) selon l'une des revendications précédentes, **caractérisé en ce qu'**au moins un élément de commande supplémentaire (5, 5', 23, 44, 45) est couplé avec le contrôleur (3), le dispositif de détection d'approche (11) étant configuré de telle sorte qu'une approche de l'élément d'actionnement (25, 34, 47) vers l'au moins un élément de commande (2, 22, 33, 46) peut être différenciée d'une approche vers l'au moins un élément de commande supplémentaire (5, 5', 23, 44, 45), le contrôleur (3) étant configuré pour, lors de la détection d'une approche de l'élément d'actionnement (25, 34, 47) vers l'au moins un élément de commande supplémentaire (5, 5', 23, 44, 45), délivrer une information en relation avec un actionnement de l'au moins un élément de commande supplémentaire (5, 5', 23, 44, 45).

6. Procédé pour détecter des entrées par un utilisateur dans un véhicule automobile, selon lequel un actionnement d'au moins un élément de commande (2, 22, 33, 46) est détecté et des signaux de commande sont générés par un contrôleur (3) couplé avec l'au moins un élément de commande (2, 22, 33, 46) pour déclencher une fonction / manipulation de commande, une approche d'un élément d'actionnement (25, 34, 47), notamment d'une partie du corps, de préférence d'un doigt, vers l'au moins un élément de commande (2, 22, 33, 46) avant un actionnement de l'au moins un élément de commande (2, 22, 33, 46) étant détectée au moyen d'un dispositif de détection d'approche (11) combiné avec le contrôleur (3) et une information en relation avec un actionnement de l'au moins un élément de commande (2, 22, 33, 46) étant délivrée avant un actionnement de l'au moins un élément de commande (2, 22, 33, 46) suite à l'approche détectée vers l'au moins un élément de commande (2, 22, 33, 46), la délivrance de l'information s'effectuant par le biais d'un dispositif d'affichage (4, 4', 21, 31, 41) couplé avec le contrôleur (3), lequel dispositif d'affichage est réalisé sous la forme d'un écran tactile, et l'au moins un élément de commande étant délivré sous la forme d'un élément de commande virtuel (5, 33, 46) au moyen du dispositif d'affichage (4, 31, 41) et la détection d'un actionnement de l'au moins un élément de commande (5, 33, 46) comprenant une détermination d'une position de toucher de l'élément d'actionnement (25, 34, 47) sur une surface du dispositif d'affichage (4, 31, 41), l'information en relation avec l'actionnement de l'au moins un élément de commande (2, 22, 33, 46) indiquant quelles prochaines conséquences a un actionnement de l'au moins un élément de commande (2, 22, 33, 46).

7. Procédé selon la revendication 6, **caractérisé en ce que** l'information délivrée est délivrée sous la forme d'une vue (42') d'au moins une partie de la surface d'affichage du dispositif d'affichage (4, 4', 21, 31, 41), laquelle vue s'affiche après un actionnement sur le dispositif d'affichage (4, 4', 21, 31, 41).

8. Procédé selon l'une des revendications 6 ou 7, **caractérisé en ce qu'**une explication de la fonction / manipulation de commande déclenchée lors de l'actionnement de l'au moins un élément de commande (46) est délivrée.

9. Procédé selon l'une des revendications 6 à 8, **caractérisé en ce qu'**au moins un élément de commande supplémentaire (5, 5', 23, 44, 45) est couplé avec le contrôleur, le dispositif de détection d'approche (11) étant configuré de telle sorte qu'une approche de l'élément d'actionnement (25, 34, 47) vers l'au moins un élément de commande (2, 22, 46) est différenciée d'une approche vers l'au moins un élément de commande supplémentaire (5, 5', 23, 44, 45), une information en relation avec un actionnement de l'au moins un élément de commande supplémentaire (5, 5', 23, 44, 45) étant délivrée lors de la détection d'une approche de l'élément d'actionnement (25, 34, 47) vers l'au moins un élément de commande supplémentaire (5, 5', 23, 44, 45) .

10. Procédé selon l'une des revendications 6 à 9, **caractérisé en ce que** l'information en relation avec l'au moins un élément de commande (2, 22, 33, 46) ou l'au moins un élément de commande supplémentaire (5, 5', 23, 44, 45) est délivrée de manière sonore et visuelle.

11. Procédé selon l'une des revendications 6 à 10, **caractérisé en ce que** la délivrance des informations avant l'actionnement de l'élément de commande (2, 22, 46) n'a lieu que si l'approche de l'élément d'actionnement (25, 34, 47) vers l'au moins un élément de commande (2, 22, 46) et/ou l'au moins un élément de commande supplémentaire (5, 5', 23, 44, 45) dure un temps qui est supérieur à un intervalle de temps prédéfini.
